# EUROPEAN PATENT SPECIFICATION

(11) **EP 1 437 293 B1**
(45) Date of publication and mention of the grant of the patent: **14.12.2005**
(21) Application number: 03029419.3
(22) Date of filing: 19.12.2003
(51) Int. Cl.: B62J 1/12, B62K 19/46, B62J 1/10

(54) **Small vehicle**
Kleinfahrzeug
Véhicule compact

(30) Priority: 08.01.2003 JP 2003001798
(43) Date of publication of application: 14.07.2004
(73) Proprietor: HONDA MOTOR CO., Ltd., Tokyo (JP)
(72) Inventor: Kamemizu, Fuminori, 1-4-1 Chuo, Wako-shi, Saitama-ken (JP); Yamaguchi, Nobuo, 1-4-1 Chuo, Wako-shi, Saitama-ken (JP)
(74) Representative: Liska, Horst

(56) References cited:
- DE-U1- 29 820 888
- US-A- 4 964 483
- PATENT ABSTRACTS OF JAPAN vol. 2000, no. 16, 8 May 2001 (2001-05-08) & JP 2001 010572 A (YAMAHA MOTOR CO LTD), 16 January 2001 (2001-01-16)
- PATENT ABSTRACTS OF JAPAN vol. 1999, no. 02, 26 February 1999 (1999-02-26) & JP 10 297566 A (HONDA MOTOR CO LTD), 10 November 1998 (1998-11-10)

## Description

The present invention relates to a small vehicle including a main seat for a rider and a rear seat disposed behind the main seat for allowing a fellow passenger to sit thereon on a rear portion of a vehicle body cover, and the vehicle cover including a storage space extending at least from the front end of the main seat to the rear end of the rear seat formed in the vehicle body cover below the main seat and the rear seat.

In such type of small vehicle, for example, in a scooter type motorcycle, a main seat and a rear seat for covering an upper end opening of a storage space is mounted to the rear portion of the vehicle body cover so as to be capable of being opened and closed.

Document JP-A- 2001- 10572 discloses a small vehicle according to the preamble of claim 1.

However, in the small vehicle constituted as described above, since a power unit is disposed downwardly of the main seat and the rear seat, a space formed by the main seat and the rear seat in a state in which the upper end opening of the storage space is closed with respect to the power unit is partly small, and thus the storage space is obliged to be partly reduced in size. Therefore, although the storage space is relatively elongated in the fore-and-aft direction of the small vehicle, an elongated object, such as a golf bag cannot be stored in the storage space.

In view of such circumstances, it is an object of the present invention to provide a small vehicle having high storability by enabling storage of an elongated object in a storage space.

In order to achieve the object described above, the present invention provides a small vehicle including a main seat for a rider and a rear seat arranged behind the main seat for allowing a fellow passenger to sit thereon disposed on the rear portion of a vehicle body cover, and a storage space is formed so as to extend at least from the front end of the main seat to the rear end of the rear seat formed in the vehicle body cover below the main seat and the rear seat, characterized in that a lid member, which has an opening in the portion corresponding at least to one of the main seat and the rear seat and supports the main seat and the rear seat, is mounted to the rear portion of the vehicle body cover so as to openably cover the upper end opening of the storage space, a variable shape closing member formed of a deformable material for closing the opening is mounted to the lid member, and at least one of the main seat and the rear seat corresponding to the opening is mounted to the lid member via a supporting member which can be adjusted in height from the lid member.

In this arrangement, the opening formed on the lid member for covering the upper end opening of the storage space is closed by the variable shape closing member, and at least one of the main seat and the rear seat corresponding to the opening can be mounted to the lid member so as to be capable of being adjusted in height. Therefore, when the height of the seat is heightened, it is possible to deform the variable shape closing member in the space between the seat and the lid member. Consequently, when an object, which might project from the opening of the lid member when the lid member is closed, is stored in the storage space, the upper end opening of the storage space may be closed by the lid member and the variable shape closing member while deforming the variable shape closing member, and thus the elongated object can be stored in the storage space using the storage space of the small vehicle, which is elongated in the fore-and-aft direction, effectively from the front end to the rear end thereof, so that the storability is improved. In addition, even when the object to be stored, which may deform the variable shape closing member, is not stored in the storage space, the height of the seat may be adjusted according to the physical constitution of at least one of the rider and the fellow passenger by adjusting the height of at least one of the main seat and the rear seat.

As described thus far, according to the present invention, even when an object to be stored, which might be projected upward from the opening of the lid member when the lid member is closed, is stored in the storage space, the upper end opening of the storage space may be closed by the lid member and the variable shape closing member while deforming the variable shape closing member, and thus the elongated object may be stored in the storage space that is elongated in the fore-and-aft direction of the small vehicle by utilizing the space effectively from the front end to the rear end, whereby storability may be improved. In addition, by adjusting the height of at least one of the main seat and the rear seat, the height of the seat can be adjusted according to the physical constitution of at least one of the rider and the fellow passenger.

An embodiment of the present invention will be described based on an example of the present invention shown in attached drawings.

Fig. 1 to Fig. 7 show an embodiment of the present invention.
Fig. 1 is a side view of a scooter type motorcycle.
Fig. 2 is an exploded perspective view of a lid member, a supporting member and a main seat.
Fig. 3 is a drawing viewed in a direction indicated by an arrow 3-3 in Fig. 2 in a state in which the supporting member is attached to the lid member.
Fig. 4 is a cross-sectional view taken along the line 4-4 in Fig. 3.
Fig. 5 is a cross-sectional view taken along the line 5-5 in Fig. 3.
Fig. 6 is a cross-sectional view taken along the line 6-6 in Fig. 3.
Fig. 7 is a side view of the scooter type motorcycle in a state in which the main seat is elevated.

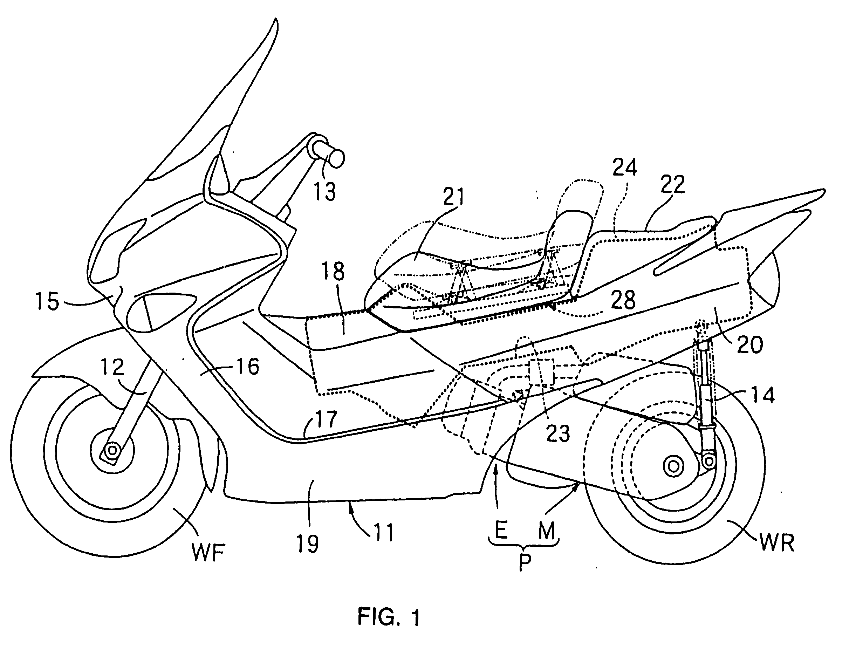

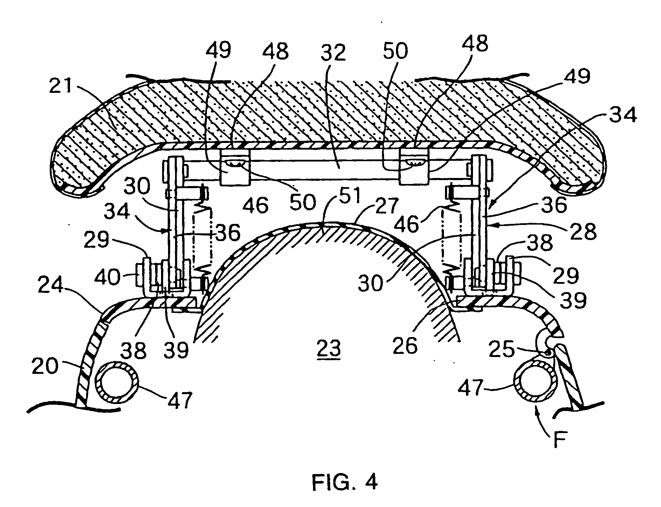

In Fig. 1, a vehicle body of the scooter type motorcycle includes a vehicle body frame F (See Fig. 4), and a vehicle body cover 11 of synthetic resin for covering the vehicle body frame F. A front wheel WF is journaled at the lower end of a front fork 12, which is steerably supported at the front end of the vehicle body frame F, and a bar-shaped steering handle 13 is connected to the upper portion of the front fork 12. In the midsection in the fore-and-aft direction of the vehicle frame F, a power unit P including an engine E and a transmission M is supported so as to be capable of swinging motion in the vertical direction with a part of it covered by the vehicle body cover 11. A rear wheel WR is journaled at the rear portion of the power unit P, and a rear cushion unit 14 is disposed between the rear portion of the vehicle body frame F and the power unit P.

The vehicle body cover 11 includes a front cover 15 for covering the upper portion of the front wheel WF, a pair of left and right leg shields 16... joined on the left and right sides of the front cover 15 for covering forwardly of the legs of the rider, a pair of left and right foot decks 17... continuing from the leg shields 16... for supporting the rider's feet, a floor tunnel portion 18 swelling upward between the foot decks 17..., skirt portions 19... suspending downwardly from the outer edges of the both foot decks 17..., and a rear cover 20 to be joined to the foot decks 17... and the floor tunnel portion 18 by covering the both left and right sides of the rear portion of the vehicle body frame F.

Provided on the rear portion of the vehicle body cover 11, that is, on the rear cover 20 are a main seat 21 on which the rider sits, and a rear seat 22 for allowing a fellow passenger to sit thereon, and the rear seat 22 is disposed rearwardly of the main seat 21 so as to have a higher seating surface than the seating surface of the main seat 21.

Formed in the vehicle body cover 11 downwardly of the main seat 21 and the rear seat 22 is a storage space 23 extending at least from the front end of the main seat 21 to the rear end of the rear seat 22, in this embodiment, a storage space 23 extending from the floor tunnel portion 18 which is located further forwardly of the front end of the main seat 21 to the rear end of the rear seat 22.

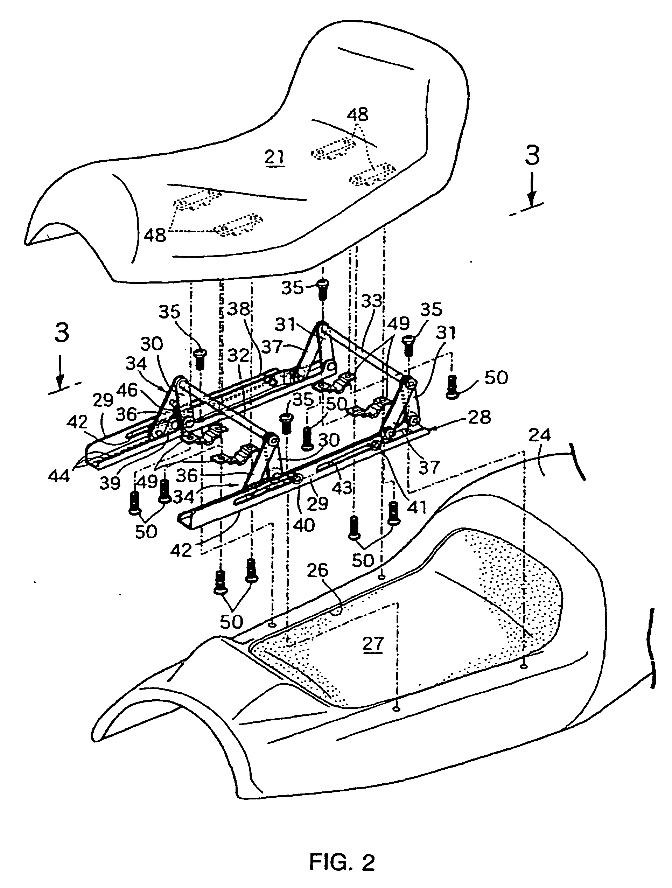

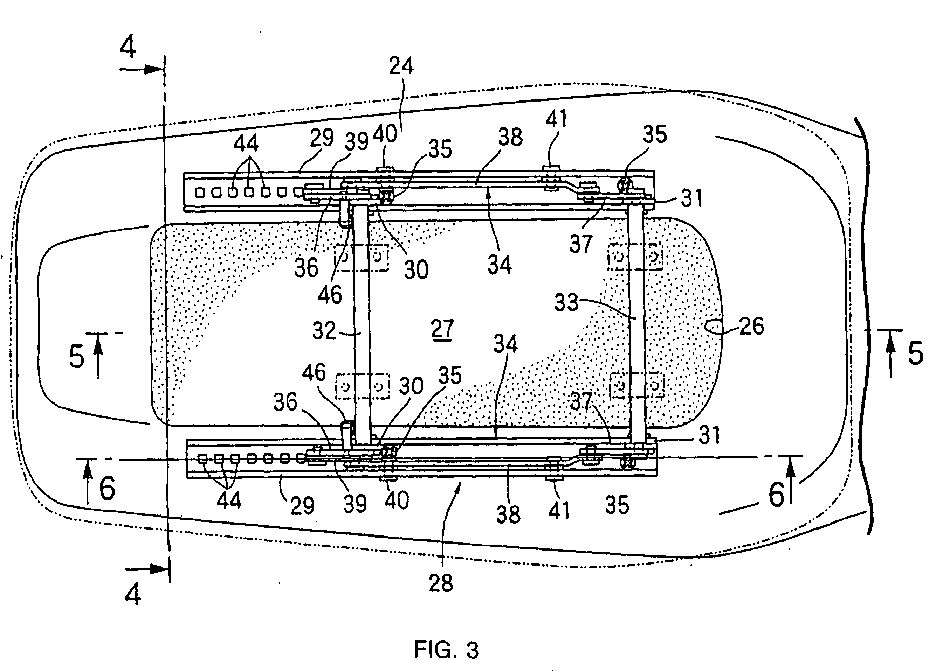

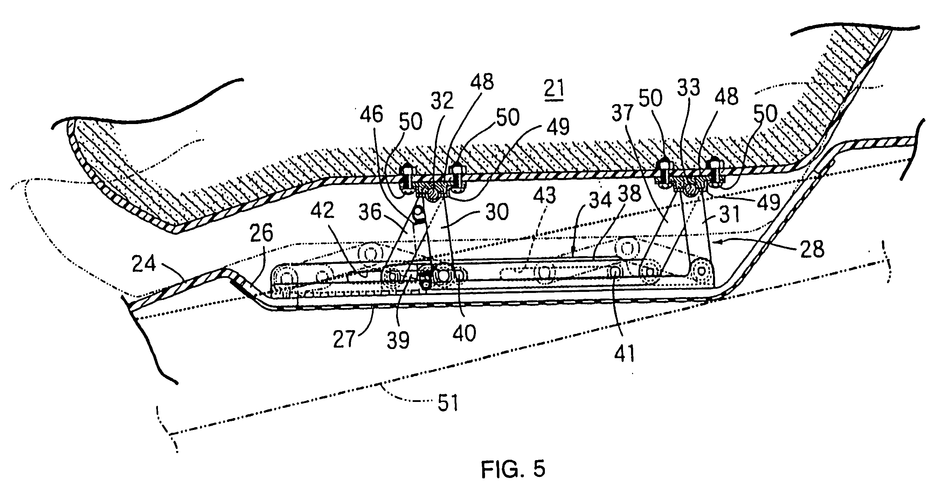

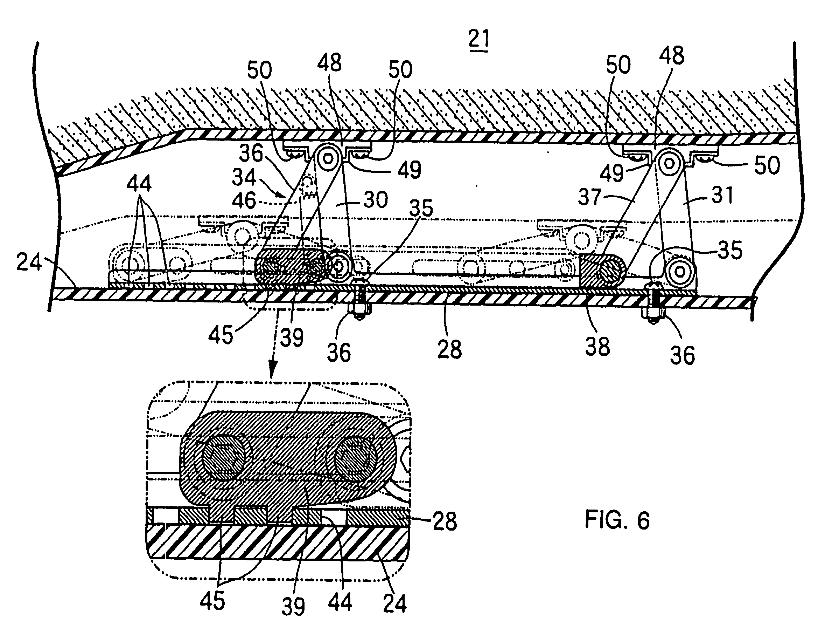

In Fig. 2 to Fig. 6, the upper end opening of the storage space 23 is to be covered by a lid member 24 formed of hard synthetic resin, and the lid member 24 is mounted via a hinge 25 to the vehicle body frame F at the right side thereof when viewed toward the direction of travel of the scooter type motorcycle. In other words, the vehicle body frame F includes a pair of left and right rear frames 47, 47 extending in the fore-and-aft direction in the rear cover 20, and the lid member 24 is mounted to one of the rear frames 47, 47 in such a manner that the lid member 24 openably covers the upper end opening of the storage space 23.

An opening 26 is formed on the portion of the lid member 24 corresponding at least to one of the main seat 21 and the rear seat 22, in this embodiment, the portion thereof corresponding to the main seat 21, and a sheet-shaped variable shape closing member 27 formed of a deformable material, for example, of soft synthetic resin, is mounted to the lid member 24 so as to cover the opening 26.

One of the main seat 21 and the rear seat 22 which corresponds to the opening 26, in this embodiment, the main seat 21, is mounted to the lid member 24 via a supporting member 28 which is adjustable in height from the lid member 24, and the rear seat 22 is directly mounted to the rear portion of the lid member 24.

The supporting member 28 includes a pair of seat rails 29, 29 to be secured to the lid member 24 on the left and right sides of the opening 26 respectively, a pair of front columns 30, 30 which is connected to the midsections in the fore-and-aft direction of both of the seat rails 29, 29 at the lower ends thereof so as to be capable of pivotal movement in the fore-and-aft direction, a pair of rear columns 31, 31 connected to the rear ends in the fore-and-aft direction of both of the seat rails 29, 29 at the lower end thereof so as to be capable of pivotal movement in the fore-and-aft direction, a front supporting rod 32 for connecting the upper ends of the front columns 30, 30, a rear supporting rod 33 for connecting the upper ends of the rear supporting columns 31, 31, and link mechanisms 34, 34 for linking the upper ends of the front columns 30, 30, and the upper ends of the rear columns 31, 31. The main seat 21 is supported by the front supporting rod 32 and the rear supporting rod 33.

The seat rails 29... are each formed to have substantially U-shaped lateral cross section, which opens upward, and are secured in parallel with each other to the lid member 24 with pairs of screw members 35, 35, respectively.

The link mechanism 34 includes front pivotal arms 36, 36 connected to the upper ends of the front columns 30, 30 so as to rotate about the axes which are coaxial with the front supporting rod 32, rear pivotal arms 37, 37 connected to the upper ends of the rear columns 31, 31 so as to rotate about the axes which are coaxial with the rear supporting rod 33, slide arms 38, 38 connected to the lower ends of the rear pivotal arms 37, 37 at the rear ends thereof and extending toward the front, and connecting arms 39, 39 for connecting the front ends of the slide arms 38, 38 with the lower ends of the front pivotal arms 36, 36.

In addition, the seat rail 29 is formed with elongated guide holes 42, 43 for allowing a pair of pins 40, 41 embedded into the slide arm 38 so as to extend in the fore-and-aft direction of the seat rail 29, and the slide arm 38 is controlled to be slid along the length of the seat rail 29 by the pins 40, 41 being guided by the guide holes 42, 43.

At the front portion of the seat rail 29, there are formed a plurality of engaging holes 44, 44, ... arranged in the fore-and-aft direction at regular intervals. The connecting arm 39 is provided with an engaging pin 45 which can selectively engage the engaging holes 44, 44, .... Between the front pivotal arm 36 and the seat rail 29, a spring 46 for urging the front pivotal arm 36 so as to maintain the engaging pin 45 at the position engaging the engaging hole 44 in the state of being contracted.

The supporting rod 32 is to be connected to the bottom of the main seat 21 via a pair of receiving members 48, 48 for receiving the upper half of the front supporting rod 32 and retaining members 49, 49 for rotatably retaining the front supporting rod 32 in cooperation with the receiving members 48, 48. The receiving members 48, 48 and the retaining members 49, 49 are secured to the main seat 21 by being fastening together with pairs of screw members 50, 50, ....

The rear supporting rod 33 is also connected to the bottom of the main seat 21 by the pair of receiving members 48, 48 for receiving the upper half of the rear supporting rod 33 and the retaining members 49, 49 that cooperate with the receiving members 48, 48 for rotatably retaining the rear supporting rod 32 and being fastened to the main seat 21 together with the receiving members 48, 48 with pairs of screw members 50, 50, ... in the same manner as the front supporting rod 32.

According to such supporting means 28, when the main seat 21 is moved upward against a spring force of the spring 46 and selective engagement of the engaging pin 45 with respect to the engaging holes 44, 44, ... is released, and, in this state, the main seat 21 is moved upward and downward, the front columns 30, 30 and the rear columns 31, 31 pivot in the fore-and-aft direction while sliding the slide arms 38, 38 in the fore-and-aft direction, whereby the height of the main seat 21 varies. When the main seat 21 is pushed down so that the engaging pins 45, 45 engage one of the engaging holes 44, 44, ... on each side, the height of the main seat 21 is fixed, and is maintained in this state by a spring force of the spring 46.

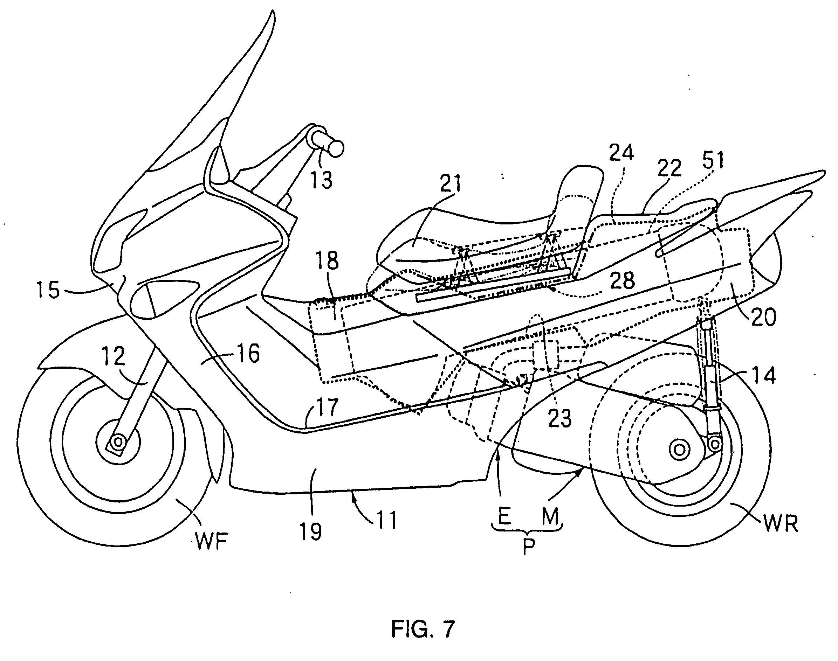

The operation of the present embodiment will be described. The opening 26 provided on the lid member 24 for covering the upper end opening of the storage space 23 is closed by the variable shape closing member 27, and the main seat 21 corresponding to the opening 26 is mounted to the lid member 24 so as to be capable of being adjusted in height. Therefore, when the main seat 21 is fixed to a high position as shown in Fig. 7, the variable shape closing member 27 can be deformed in a space between the main seat 21 and the lid member 24.

Therefore, even when an object to be stored 51 such as a golf bag, which projects upward from the opening 26 of the lid member 24 when the lid member 24 is closed, is stored in the storage space 23, the upper end opening of the storage space 23 can be closed by the lid member 24 and the variable shape closing member 27 while deforming the variable shape closing member 27, and thus the elongated object to be stored 51 can be stored in the storage space 23 utilizing the storage space 23 elongated in the fore-and-aft direction of the scooter type motorcycle effectively from the front end to the rear end, whereby storability may be improved.

Even when an object to be stored that might deform the variable shape closing member 27 is not stored in the storage space 23, the height of the main seat 21 may be adjusted according to the physical constitution of the rider.

Although the embodiment of the present invention has been described thus far, the present invention is not limited thereto, and various modification of design may be made without departing from the scope stated in the appended claims.

For example, the height of the main seat 21 is adjustable in the embodiment. However, it is also applicable to constitute the rear seat 22 to be adjustable in height, or to form the main seat 21 and the rear seat 22 into a single unit so that the height thereof may integrally be adjusted. The present invention may also be applied to the motor tricycle.

In a small vehicle including a storage space formed in a vehicle body cover and downwardly of a main seat and a rear seat, which are disposed on the rear portion of the vehicle body cover, so as to extend at least from the front end of a main seat to the rear end of the rear seat, to enable storage of an elongated object into the storage space, so that storability is improved.

A lid member 24 having an opening 26 at a portion thereof corresponding at least to one of a main seat 21 and a rear seat for supporting the main seat 21 and the rear seat is mounted to the rear portion of a vehicle body cover so as to be capable of opening and closing an upper end opening of a storage space 23, a variable shape closing member 27 formed of a deformable material for closing the opening 26 is mounted to the lid member 24, and one of the main seat 21 and the rear seat corresponding to the opening 26 is mounted to the lid member 24 via a supporting member 28 that is capable of being adjusted in height from the lid member 24.

## Claims

1. A small vehicle comprising a main seat (21) for a rider and a rear seat (22) arranged behind the main seat (21) for allowing a fellow passenger to sit thereon disposed on the rear portion of a vehicle body cover (11), and a storage space (23) is formed so as to extend at least from the front end of the main seat (21) to the rear end of the rear seat (22) formed in the vehicle body cover (11) below the main seat (21) and the rear seat (22), **characterized in that** a lid member (24), which has an opening (26) in the portion corresponding at least to one of the main seat (21) and the rear seat (22) and supports the main seat (21) and the rear seat (22), is mounted to the rear portion of the vehicle body cover (11) so as to openably cover the upper end opening of the storage space (23), a variable shape closing member (27) formed of a deformable material for closing the opening (26) is mounted to the lid member (24), and the main seat (21) corresponding to the opening (26) among the main seat (21) and the rear seat (22) is mounted to the lid member (24) via a supporting member (28) which can be adjusted in height from the lid member (24).

## Patentansprüche

1. Kleines Fahrzeug, umfassend: einen Hauptsitz (21) für einen Fahrer und einen Rücksitz (22), der hinter dem Hauptsitz (21) angeordnet ist, um einem Beifahrer zu erlauben, darauf zu sitzen, und am hinteren Abschnitt einer Fahrzeugkarosserieabdeckung (11) angeordnet ist; und einen Stauraum (23), der so ausgebildet ist, dass er sich wenigstens vom Vorderende des Hauptsitzes (21) zum Hinterende des Rücksitzes (22) erstreckt und in der Fahrzeugkarosserieabdeckung (11) unterhalb des Hauptsitzes (21) und des Rücksitzes (22) ausgebildet ist; **dadurch gekennzeichnet, dass** ein Deckelelement (24), das eine Öffnung (26) in dem Abschnitt aufweist, der wenigstens dem Hauptsitz (21) und/oder dem Rücksitz (22) entspricht und den Hauptsitz (21) und den Rücksitz (22) unterstützt, am hinteren Abschnitt der Fahrzeugkarosserieabdeckung (11) montiert ist, so dass die obere Öffnung des Stauraums (23) abgedeckt wird und geöffnet werden kann, wobei ein Schließelement (27) mit veränderlicher Form, das aus einem verformbaren Material gefertigt ist, zum Verschließen der Öffnung (26) am Deckelelement (24) montiert ist, wobei von Hauptsitz (21) und Rücksitz (22) der Hauptsitz (21) entsprechend der Öffnung (26) am Deckelelement (24) über ein Unterstützungselement (28) montiert ist, das gegenüber dem Deckelelement (24) in der Höhe eingestellt werden kann.

## Revendications

1. Petit véhicule comprenant un siège principal (21) pour un conducteur et un siège arrière (22) agencé derrière le siège principal (21) pour permettre au passager de s'asseoir dessus, disposé sur la portion arrière d'une enveloppe protectrice de corps de véhicule (11), et un espace de stockage (23) est formé de manière à s'étendre au moins depuis l'extrémité avant du siège principal (21) à l'extrémité arrière du siège arrière (22) formé dans l'enveloppe protectrice du corps de véhicule (11) au-dessous du siège principal (21) et du siège arrière (22), **caractérisé en ce qu'**un élément formant couvercle (24) qui a une ouverture (26) dans la portion correspondant au moins à un du siège principal (21) et du siège arrière (22) et supporte le siège principal (21) et le siège arrière (22), est monté sur la portion arrière de l'enveloppe protectrice du corps de véhicule (11) de façon à recouvrir de manière à pouvoir être ouvert l'ouverture d'extrémité supérieure de l'espace de stockage (23), un élément de fermeture de forme variable (27) formé d'un matériau déformable pour fermer l'ouverture (26) est monté sur l'élément formant couvercle (24), et le siège principal (21) correspondant à l'ouverture (26) parmi le siège principal (21) et le siège arrière (22) est monté sur l'élément formant couvercle (24) par l'intermédiaire d'un élément de support (28) pouvant être ajusté en hauteur depuis l'élément formant couvercle (24).
